# EUROPÄISCHE PATENTANMELDUNG

(11) **EP 4 586 032 A1**
(43) Veröffentlichungstag der Anmeldung: **16.07.2025**
(21) Anmeldenummer: 24151444.7
(22) Anmeldetag: 11.01.2024
(51) Int. Cl.: G05B 23/02

(54) **SIGNALLEUCHTENÜBERWACHUNGSVORRICHTUNG**

(71) Anmelder: Murrelektronik GmbH, 71570 Oppenweiler (DE)
(72) Erfinder: Baier, Bastian, 71570 Oppenweiler (DE); Lentmaier, Steffen, 71570 Oppenweiler (DE)
(74) Vertreter: Prinz & Partner mbB

(57) **Zusammenfassung**

Die Erfindung betrifft eine Signalleuchtenüberwachungsvorrichtung (22) zur Überwachung wenigstens einer Signalleuchte (16) einer Anlage (12), mit zumindest einer optischen Erfassungseinheit (24), die dazu ausgebildet ist, ein durch eine Signalleuchte (16) ausgegebenes Signal optisch zu erfassen und basierend auf dem erfassten Signal ein erfasstes Signal zu generieren. Ferner umfasst die Signalleuchtenüberwachungsvorrichtung (22) eine Auswerteeinheit (28), die dazu ausgebildet ist, das von der optischen Erfassungseinheit (24) generierte Signal auszuwerten und basierend auf dem Auswertungsergebnis eine Statusinformation auszugeben. Die Erfindung betrifft außerdem ein System mit einer Signalleuchtenüberwachungsvorrichtung (22) und ein Verfahren zum Überwachen einer Signalleuchte (16).

## Beschreibung

Die Erfindung betrifft eine Signalleuchtenüberwachungsvorrichtung und ein System mit einer Signalleuchtenüberwachungsvorrichtung. Ferner betrifft die Erfindung ein Verfahren zum Überwachen einer Signalleuchte.

Um industrielle Prozesse in Anlagen zu optimieren, müssen prozessrelevante Daten erfasst und ausgewertet werden. Beispielsweise stammen die prozessrelevanten Daten von verschiedenen Maschinen einer Anlage, die in den Prozessen involviert sind. Demnach können diese prozessrelevanten Daten unter anderem Informationen über Taktzeiten, Störungen, Auslastungen oder Stillstandzeiten von den Maschinen und/oder vergleichbare Parameter enthalten.

In modernen bzw. neuen Anlagen werden derartige Daten oft automatisch erfasst oder lassen sich zumindest vergleichsweise einfach erfassen. So können Datenerfassungsvorrichtungen, wie beispielsweise Edge Gateways, genutzt werden, um Daten direkt aus Steuerungen von Maschinen oder von Feldbussen zu erfassen und nutzbar zu machen, insbesondere zentral zu sammeln und auszuwerten.

In vielen bereits bestehenden Anlagen, insbesondere älteren Industrieanlagen, ist jedoch die Installation entsprechender Datenerfassungsvorrichtungen oft nicht oder nur mit sehr hohem Aufwand möglich. Dies liegt beispielsweise daran, dass die Anlagentechnik aufgrund ihres Alters inkompatibel mit modernen Datenerfassungsvorrichtungen ist, sodass eine Nachrüstung nur mit sehr hohen Kosten einhergeht.

Die Aufgabe der Erfindung ist es, diese aus dem Stand der Technik bekannten Nachteile zu beheben und ein System bereitzustellen, mit dem anlagenbezogene Daten auf einfache und kostengünstige Weise erfasst werden können.

Die Aufgabe wird erfindungsgemäß gelöst durch eine Signalleuchtenüberwachungsvorrichtung zur Überwachung wenigstens einer Signalleuchte einer Anlage. Die Signalleuchtenüberwachungsvorrichtung weist zumindest eine optische Erfassungseinheit auf, die dazu ausgebildet ist, ein durch eine Signalleuchte ausgegebenes Signal optisch zu erfassen und basierend auf dem erfassten Signal ein erfasstes Signal zu generieren. Ferner weist die Signalleuchtenüberwachungsvorrichtung eine Auswerteeinheit auf, die dazu ausgebildet ist, das von der optischen Erfassungseinheit generierte Signal auszuwerten und basierend auf dem Auswertungsergebnis eine Statusinformation auszugeben.

Die Aufgabe wird ferner gelöst durch ein System mit einer derartigen Signalleuchtenüberwachungsvorrichtung und einer Anlage, die eine Signalleuchte umfasst.

Bei dem von der optischen Erfassungseinheit generierten Signal kann es sich um ein (analoges) elektrisches Signal handeln, beispielsweise ein Stromsignal oder ein Spannungssignal. Auch kann die optische Erfassungseinheit ein digitales Signal generieren, welches dann von der Auswerteeinheit ausgewertet wird. Es kann basierend auf dem erfassten Signal also ein analoges Signal (zeitkontinuierlich) oder ein digitales Signal (zeitdiskret) generiert werden.

Insbesondere ist es möglich, dass das von der optischen Erfassungseinheit generierte Signal mehrfach verarbeitet wird, beispielsweise von unterschiedlichen Komponenten, bevor das von der optischen Erfassungseinheit generierte Signal dann von der Auswerteeinheit ausgewertet wird.

Hierdurch ist beispielsweise sichergestellt, dass ein Funksignal erzeugt wird, sodass die von der Erfassungseinheit generierten Informationen/Daten kabel- bzw. drahtlos an die Auswerteeinheit übertragen werden. Bei dem von der Erfassungseinheit generierten Signal kann es sich also um ein kabel- bzw. drahtlos übertragbares Signal handeln.

Grundsätzlich kann das von der optischen Erfassungseinheit generierte Signal einen Rahmen (Frame) und ein Datenpaket umfassen. Vorzugsweise können mittels des von der optischen Erfassungseinheit generierten Signals unter anderem Bildinformationen bzw. Bilddaten als Datenpaket übertragen werden.

Unter einer Signalleuchte ist eine Leuchte zur Anzeige von Betriebszuständen einer Anlage oder einer Maschine zu verstehen. Die Anlage kann demnach eine Signalleuchte aufweisen. Die Signalleuchte kann einen Betriebszustand der gesamten Anlage optisch signalisieren. Da die Anlage zumindest eine Maschine aufweisen kann, insbesondere mehrere Maschinen, kann die Signalleuchte auch den Betriebszustand der entsprechenden Maschine optisch signalisieren. Jede Maschine der Anlage kann eine eigene Signalleuchte aufweisen.

Insbesondere kann die Signalleuchte eine Anzeigeleuchte im Sinne der Maschinenrichtlinie und/oder der Norm DIN EN 60204-1 sein.

Die Signalleuchte kann als Signalsäule oder Rundumleuchte ausgebildet sein. In einer alternativen Ausführungsform kann es sich aber auch um eine Leuchte und/oder ein beleuchtetes Element an einem Bedienpult einer Maschine handeln.

Dadurch, dass die optische Erfassungseinheit dazu ausgebildet ist, ein durch die Signalleuchte ausgegebenes Signal optisch zu erfassen, können Informationen über den Betriebszustand der Anlage gewonnen werden, ohne direkt in den Betrieb der Anlage eingreifen zu müssen, insbesondere ohne elektrische oder elektronische Anpassungen an der Anlage durchführen zu müssen.

So können für die Prozessoptimierung und/oder Wartung wichtige Statusinformationen gewonnen werden, ohne dabei zu riskieren, die Funktionsfähigkeit und/oder Sicherheit der Anlage zu beeinträchtigen. Es muss insbesondere keine Manipulation der Anlage bzw. der Maschine(n) der Anlage bzgl. der elektrischen bzw. elektronischen Anbindung erfolgen, um die Statusinformationen zu erhalten.

Es wird erfindungsgemäß ausgenutzt, dass bestehende Anlagen wenigstens eine Signalleuchte aufweisen, über die der Betriebszustand der Anlage, insbesondere der (jeweilige) Betriebszustand der jeweilige(n) Maschine(n), optisch signalisiert wird. Dieses optisch ausgegebene Signal wird optisch erfasst, um ein erfasstes Signal zu generieren, welches dann ausgewertet wird.

In einer Variante der Erfindung ist die optische Erfassungseinheit dazu ausgebildet, zumindest eine Eigenschaft des optischen Signals zu erfassen und das erfasste Signal in Abhängigkeit der erfassten Eigenschaft zu generieren, insbesondere wobei die Eigenschaft eine Lichtfarbe, eine Intensität und/oder eine Signalabfolge ist.

Es kann ein Blinken oder ein sich wiederholender Wechsel der Farbe des optischen Signals erfasst werden, insbesondere ein entsprechendes Muster, also eine bestimmte Abfolge der Farben bzw. der jeweiligen Zeitdauer der Farben.

Aus den erfassten Eigenschaften können dann direkt Rückschlüsse auf den Betriebszustand und/oder Betriebszustandsänderungen der Anlage gezogen werden, insbesondere der jeweilige(n) Maschine(n) der Anlage.

Die Auswerteeinheit und die optische Erfassungseinheit können auf einem gemeinsamen Träger oder in einem gemeinsamen Gehäuse angeordnet sein. Dadurch wird ein sehr platzsparender Aufbau erreicht. Das Nachrüsten einer bestehenden Anlage mit der Signalleuchtenüberwachungsvorrichtung gestaltet sich hierdurch besonders einfach.

Alternativ können die Auswerteeinheit und die optische Erfassungseinheit auch beabstandet voneinander angeordnet sein, insbesondere an unterschiedlichen Positionen innerhalb der Anlage. In diesem Zusammenhang ist auch denkbar, dass mehrere über die Anlage verteilte optische Erfassungseinheiten vorgesehen sind und eine Auswerteeinheit, an welcher die erfassten Signale der optischen Erfassungseinheiten, also die von den optischen Erfassungseinheiten generierten Signale, zusammenlaufen und gemeinsam ausgewertet werden. Dies ist insbesondere bei großen Anlagen bzw. bei großen Maschinen von Vorteil, da es bei derartigen Anlagen und Maschinen dazu kommen könnte, dass die Signalleuchten teilweise verdeckt sind. Durch mehrere optische Erfassungseinheiten kann sichergestellt werden, dass die Signalleuchten in jedem Fall optisch überwacht werden können.

In einer weiteren Ausführungsform umfasst die optische Erfassungseinheit ein Kommunikationsmodul, das dazu ausgebildet ist, kabellos mit der Auswerteeinheit zu kommunizieren. Dies ermöglicht eine Kommunikation zwischen der optischen Erfassungseinheit und der Auswerteeinheit auch über größere Abstände, ohne hierfür Kabel vorsehen zu müssen, die den Anlagenbetrieb stören könnten. Auch reduziert sich hierdurch der Aufwand für die Implementierung der Signalleuchtenüberwachungsvorrichtung in eine bereits bestehende Anlage.

Ferner ist denkbar, dass die Signalleuchtenüberwachungsvorrichtung ein Photovoltaikelement umfasst, das dazu ausgebildet ist, Licht in elektrische Energie zum Betreiben der optischen Erfassungseinheit und/oder der Auswerteeinheit umzuwandeln. Bei dem Licht kann es sich insbesondere um von der Signalleuchte ausgesendetes Licht handeln. Auf eine externe Stromversorgung kann somit verzichtet werden. Hierdurch lässt sich die optische Erfassungseinheit und/oder die Auswerteeinheit auch an Positionen verwenden, wo kein Stromanschluss vorgesehen ist.

Auch ist denkbar, dass das Photovoltaikelement zur Versorgung mit elektrischer Energie und gleichzeitig als optischer Sensor genutzt wird. Beispielsweise kann es sich bei dem Photovoltaikelement um eine Solarzelle handeln, die gleichzeitig als Photodetektor betreibbar ist. Die optische Erfassungseinheit kann also flexibel eingesetzt werden und hat dennoch einen geringen Platzbedarf.

Alternativ kann vorgesehen sein, dass die optische Erfassungseinheit zumindest eine Kamera zum Erfassen des optischen Signals umfasst. Dies ist technisch einfach umsetzbar. Zudem lassen sich hierdurch unterschiedliche Farben des optisch ausgegebenen Signals der Signalleuchte einfacher voneinander unterscheiden.

Die Kamera kann außerdem neben der Erfassung von optischen Signalen der Signalleuchte auch für verschiedene weitere Zwecke genutzt werden. Sie kann beispielsweise Bestandteil eines Überwachungssystems der Anlage sein. Durch diese doppelte Nutzung kann Hardware eingespart werden.

In einer Variante der Erfindung ist die Kamera dazu ausgebildet, mehrere optische Signale verschiedener Signalleuchten zu erfassen, insbesondere gleichzeitig. So können mit nur wenigen, im Extremfall mit nur einer einzigen optischen Erfassungsvorrichtung, eine Vielzahl von Signalleuchten überwacht werden.

Alternativ oder zusätzlich kann die Kamera auch dazu ausgebildet sein, weitere Elemente und/oder Zustände der die Signalleuchte aufweisenden Anlage zu erfassen. Denkbar ist, dass erfasst wird, ob eine Anlagentüre geöffnet oder geschlossen ist, ob sich ein Werkstück in der Anlage befindet und/oder ob sich eine Person in einem Gefahrenbereich der Anlage befindet. Diese zusätzlichen Informationen können zur Optimierung der Anlage und/oder zur Verbesserung der Sicherheit genutzt werden.

In einer weiteren Ausführungsform umfasst die optische Erfassungseinheit mehrere optische Sensoren, beispielsweise Photodetektoren. Die optischen Sensoren können unterschiedlicher Bauart sein, insbesondere um Licht unterschiedlicher Wellenlänge bzw. Farbe detektieren zu können. Mit verschieden ausgebildeten Photovoltaikelementen lassen sich also verschiedene Farben detektieren, da sich die entsprechende Wellenlänge des ausgesandten Lichts unterscheidet.

Bei dem System kann die Signalleuchtenüberwachungsvorrichtung gemäß der zuvor beschriebenen Art und Weise ausgebildet sein. Die jeweiligen Vorteile, die zur Signalleuchtenüberwachungsvorrichtung diskutiert wurden, gelten für das System daher in entsprechender Weise.

Vorzugsweise weist die optische Erfassungseinheit zumindest einen optischen Sensor auf, welcher der Signalleuchte zugeordnet ist. Der optische Sensor kann unmittelbar an der Signalleuchte angebracht sein. Beispielsweise kann er mittels eines Klebestreifens und/oder eines Klemmelements und/oder eines Rastelements direkt an der Signalleuchte befestigt sein. Dadurch wird sichergestellt, dass der optische Sensor einen großen Anteil des von der Signalleuchte ausgesendeten Lichts empfängt. Im gleichen Zuge wird die Empfindlichkeit der optischen Erfassungsvorrichtung gegenüber Streulicht reduziert, welches zu Fehlaktivierungen des zumindest einen optischen Sensors führen könnte.

Es ist auch denkbar, dass die Signalleuchte mehrere Segmente aufweist, und die optische Erfassungseinheit mehrere optische Sensoren umfasst, die über die mehreren Segmente der Signalleuchte verteilt angeordnet sind. Beispielsweise kann es sich bei der optischen Erfassungseinheit um einen an der Signalleuchte angebrachten Sensorstreifen handeln. Sensorstreifen sind kostengünstig und können besonders einfach an Signalleuchten angebracht werden. Bestehende Anlagen können entsprechend schnell und mit geringem Aufwand mit einer erfindungsgemäßen Signalleuchtenüberwachungsvorrichtung nachgerüstet werden.

Die Signalleuchte mit den mehreren Segmenten kann als Signalampel ausgebildet sein.

Die Anlage kann eine oder mehrere Maschinen umfassen, beispielsweise Produktions- und/oder Verarbeitungsmaschinen. Die Maschinen wiederum können jeweils mit einer oder mehreren Signalleuchten ausgerüstet sein, die mit einer Signalleuchtenüberwachungsvorrichtung oder mehreren Signalleuchtenüberwachungsvorrichtungen überwacht werden.

Außerdem kann eine Zentraleinheit vorgesehen sein, die dazu eingerichtet ist, die von der Auswerteeinheit ausgegebene Statusinformation zu erhalten und zu verarbeiten. Über die Zentraleinheit können so basierend auf der Statusinformation weitere Aktionen ausgelöst werden. Beispielsweise können Fehler- oder Warnmeldungen ausgegeben oder regulierend in den Betrieb der Anlage eingegriffen werden. Bei der Zentraleinheit kann es sich beispielsweise um einen Rechner oder ein Netzwerk handeln.

Es ist auch denkbar, dass die optische Erfassungseinheit, die Auswerteeinheit und die Zentraleinheit ein gemeinsames Gerät bilden bzw. in einem einzigen Gerät vereint sind.

Zudem ist möglich, dass die Auswerteeinheit ein Kommunikationsmodul aufweist, das dazu ausgebildet ist, kabellos mit der Zentraleinheit zu kommunizieren, insbesondere die Statusinformation kabellos an die Zentraleinheit zu übertragen. Die Auswerteeinheit kann dadurch technisch besonders einfach und ohne den Einsatz zusätzlicher Hardware mit der Zentraleinheit sowie weiteren Geräten verbunden werden.

Die Aufgabe wird ferner gelöst durch ein Verfahren zum Überwachen einer Signalleuchte mit einer Signalleuchtenüberwachungsvorrichtung der zuvor genannten Art. Das Verfahren umfasst die Schritte:
- Erfassen eines durch die Signalleuchte ausgegebenen optischen Signals;
- Generieren eines erfassten Signals basierend auf dem erfassten optischen Signal;
- Erzeugen einer Statusinformation durch Auswerten des von der optischen Erfassungseinheit generierten Signals; und
- Übermitteln der Statusinformation.

Die Vorteile, die zur Signalleuchtenüberwachungsvorrichtung und dem erfindungsgemäßen System diskutiert wurden, gelten selbstverständlich auch für das Verfahren in entsprechender Weise.

Weitere Merkmale und Vorteile der Erfindung ergeben sich aus der nachfolgenden Beschreibung sowie aus den Zeichnungen, auf die Bezug genommen wird. In den Zeichnungen zeigen:
- Fig. 1 eine schematische Darstellung eines erfindungsgemäßen Systems mit einer erfindungsgemäßen Signalleuchtenüberwachungsvorrichtung, die eine Kamera umfasst;
- Fig. 2 eine schematische Darstellung eines Ausschnittes einer weiteren Ausführungsvariante eines erfindungsgemäßen Systems mit einer Signalleuchtenüberwachungsvorrichtung, die optische Sensoren umfasst, welche an einer segmentierten Signalleuchte angebracht sind; und
- Fig. 3 eine schematische Darstellung eines Ausschnittes einer weiteren Ausführungsvariante eines erfindungsgemäßen Systems mit einer Signalleuchtenüberwachungsvorrichtung, die einen an einer Signalleuchte angebrachten Sensorstreifen umfasst.

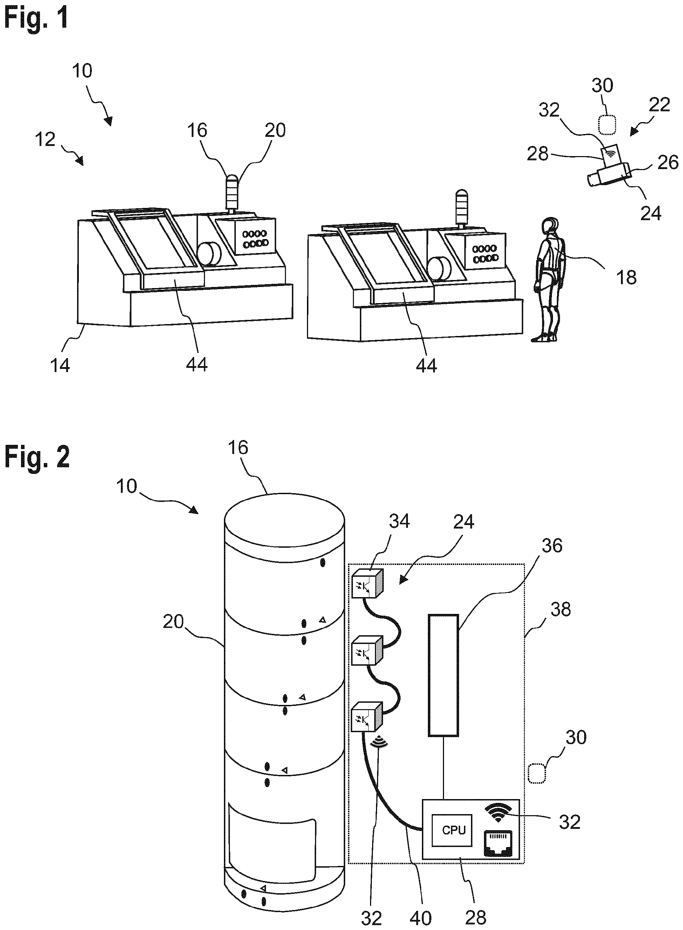

Figur 1 zeigt eine schematische Darstellung eines erfindungsgemäßen Systems 10 mit einer Anlage 12, insbesondere einer Industrieanlage, die mehrere produzierende oder verarbeitenden Maschinen 14 umfasst.

Die Maschinen 14 weisen jeweils eine Signalleuchte 16 auf, die den Betriebsstatus der jeweiligen Maschine 14 anzeigt und/oder Meldungen an Bedien- oder Wartungspersonal 18 als optisches Signal ausgeben kann.

Im Ausführungsbeispiel sind die Signalleuchten 16 als Signalsäulen ausgebildet und weisen jeweils mehrere Segmente 20 auf. Jedes der Segmente 20 ist dazu ausgebildet, Licht in einer bestimmten Farbe auszusenden, wenn es aktiviert wird.

Beispielsweise ist die als Signalsäule Signalleuchte 16 eine Signalampel, die im obersten Segment 20 ein rotes Licht, im mittleren Segment 20 gelbes bzw. oranges Licht und im unteren Segment 20 grünes Licht ausgibt.

Optional kann noch ein weiteres Segment 20 oder eine Lichtquelle vorgesehen sein, worüber ein blaues oder weißes Signal ausgegeben wird.

Optische Signale können von der Signalleuchte 16 beispielsweise dadurch ausgegeben werden, dass eines oder mehrere der Segmente 20 (dauerhaft) leuchtet bzw. leuchten oder blinkt bzw. blinken, wobei in Abhängigkeit des Betriebszustands eine unterschiedliche Taktung beim Blinken vorgesehen sein kann. Auch ein abwechselndes Aufleuchten verschiedener Segmente 20 und ein damit verbundener Farbwechsel ist als optisches Signal denkbar.

Ebenso ist es denkbar, dass die Signalleuchte 16 nur ein Segment 20 bzw. nur eine Leuchte aufweist, die dann beispielsweise mehrfarbig ist, also Signal mit unterschiedlicher Farbe ausgeben kann.

Das in Figur 1 gezeigte System 10 weist ferner eine Signalleuchtenüberwachungsvorrichtung 22 zur (optischen) Überwachung wenigstens einer der Signalleuchten 16 der Anlage 12 auf.

Die Signalleuchtenüberwachungsvorrichtung 22 umfasst eine optische Erfassungseinheit 24, die dazu ausgebildet ist, ein durch eine der Signalleuchten 16 ausgegebenes Signal optisch zu erfassen und basierend auf dem erfassten optischen Signal ein erfasstes Signal zu generieren.

Die optische Erfassungseinheit 24 ist dazu ausgebildet, verschiedene Eigenschaften des von den Signalleuchte 16 ausgegebenen optischen Signals zu erfassen und das erfasste Signal in Abhängigkeit der erfassten Eigenschaft zu generieren.

Es können beispielsweise die Lichtfarbe, die Intensität und/oder zeitliche Veränderungen der zuvor genannten Eigenschaften (z.B. ein Blinken oder ein Farbwechsel) erfasst werden. Insbesondere ist auch denkbar, dass die optische Erfassungseinheit 24 verschiedene Signalfolgen erfassen kann.

Im Ausführungsbeispiel umfasst die optische Erfassungseinheit 24 eine Kamera 26 zum Erfassen der von den Signalleuchten 16 ausgegebenen optischen Signale. Die Kamera 26 kann gleichzeitig Teil eines Überwachungs- oder Sicherheitssystems der Anlage 12 sein oder für verschiedene weitere Anwendungen genutzt werden. In diesem Zusammenhang ist denkbar, dass, wenn eine Industrieanlage mit einer erfindungsgemäßen Signalleuchtenüberwachungsvorrichtung 22 nachgerüstet wird, auf bereits vorhandene Hardware, insbesondere Kameras 26, zurückgegriffen wird.

Die Kamera 26 ist im Ausführungsbeispiel dazu ausgebildet, mehrere optische Signale von verschiedenen Signalleuchten 16, die jeweils verschiedenen Maschinen 14 zugeordnet sind, gleichzeitig zu erfassen. Es ist also nicht notwendig, für jede der Signalleuchten 16 eine eigene Kamera 26 vorzusehen.

Im Ausführungsbeispiel ist die Kamera 26 außerdem dazu ausgebildet, weitere Elemente und/oder Zustände der Anlage 12 bzw. der Maschinen 14 zu erfassen, beispielsweise ob eine Maschinentüre 44 offensteht oder ein Werkstück in eine der Maschinen 14 eingesetzt ist. Die so gewonnenen zusätzlichen Informationen können beispielsweise zur Prozessoptimierung genutzt werden.

Die Signalleuchtenüberwachungsvorrichtung 22 aus Figur 1 umfasst ferner eine Auswerteeinheit 28, die dazu ausgebildet ist, das von der optischen Erfassungseinheit 24 generierte Signal auszuwerten und basierend auf dem Auswertungsergebnis eine Statusinformation auszugeben.

Bei der Auswerteeinheit 28 kann es sich beispielsweise um einen mit der optischen Erfassungseinheit 24 verbundenen Rechner handeln.

Die Statusinformation kann beispielsweise eine Information darüber sein, ob die Anlage 12 ordnungsgemäß arbeitet oder stillsteht, ob Fehler vorliegen, eine Wartung notwendig ist oder ob eine Gefahrenlage besteht.

Im Ausführungsbeispiel ist außerdem eine Zentraleinheit 30 vorgesehen, die eingerichtet ist, die Statusinformation zu erhalten und zu verarbeiten, beispielsweise die Anlage 12 basierend auf der Statusinformation zu steuern und/oder eine Wartungs- oder Warnmeldung auszugeben.

Die Zentraleinheit 30 kann Bestandteil einer physischen oder virtuellen Rechner- und/oder Netzwerkstruktur zur Überwachung und/oder Steuerung der Anlage 12 sein und/oder sich in einer Cloud befinden.

Mittels der Zentraleinheit 30 kann die Statusinformation bzw. können mehrere Statusinformationen analysiert, visualisiert und/oder statistisch ausgewertet werden. Die daraus resultierenden Ergebnisse können wiederum weiteren Teilnehmern zur Verfügung gestellt werden.

Im Ausführungsbeispiel ist aus Datenschutzgründen vorgesehen, dass lediglich die Statusinformation und nicht die von der Kamera 26 aufgenommen Bilder an die Zentraleinheit 30 übermittelt werden. Dies ist selbstverständlich nicht einschränkend zu verstehen.

Die Auswerteeinheit 28 und die Zentraleinheit 30 können beispielsweise über Kabel miteinander kommunizieren. Es kann auch vorgesehen sein, das die Auswerteeinheit 28 und die Zentraleinheit 30 gemeinsam in einem Gerät ausgebildet sind.

Alternativ kann die Auswerteeinheit 28 aber auch ein Kommunikationsmodul 32 aufweisen, das dazu ausgebildet ist, kabellos mit der Zentraleinheit 30 zu kommunizieren, insbesondere die Statusinformation kabellos an die Zentraleinheit 30 zu übertragen. Hierzu kann beispielsweise W-LAN oder Funktechnologie eingesetzt werden.

Figur 2 zeigt eine schematische Darstellung eines Ausschnittes einer weiteren Ausführungsvariante eines erfindungsgemäßen Systems 10 mit einer erfindungsgemäßen Signalleuchtenüberwachungsvorrichtung 22.

Dieses entspricht in mehreren wesentlichen Aspekten dem in Figur 1 gezeigten System 10, sodass im Folgenden lediglich auf die Unterschiede eingegangen wird. Gleiche und/oder funktionsgleiche Bauteile sind mit den gleichen Bezugszeichen versehen.

Das in Figur 2 gezeigte System 10 umfasst eine segmentierte Signalleuchte 16 und eine Signalleuchtenüberwachungsvorrichtung 22 zur Überwachung von optischen Signalen, die von der Signalleuchte 16 ausgesendet werden.

Die Signalleuchtenüberwachungsvorrichtung 22 weist eine optische Erfassungseinheit 24 auf, die mehrere optische Sensoren 34 umfasst, beispielsweise Photodetektoren.

Im Ausführungsbeispiel ist jeder der optischen Sensoren 34 einem Segment 20 der Signalleuchte 16 zugeordnet. Die optischen Sensoren 34 sind dabei direkt am jeweils zugehörigen Segment 20 der Signalleuchte 16 angebracht bzw. befestigt, beispielsweise angeklebt. Mit anderen Worten sind die optischen Sensoren 34 also über die mehreren Segmente 20 der Signalleuchte 16 verteilt angeordnet, sodass jeder der optischen Sensoren 34 das vom jeweils zugeordneten Segment 20 ausgesendete Licht bzw. optische Signal erfassen kann.

Die Signalleuchtenüberwachungsvorrichtung 22 umfasst optional außerdem ein Photovoltaikelement 36, beispielsweise eine Solarzelle. Das Photovoltaikelement 36 ist dazu ausgebildet, Licht, insbesondere von der Signalleuchte 16 ausgesendetes Licht, in elektrische Energie zum Betreiben der optischen Erfassungseinheit 24 und/oder der Auswerteeinheit 28 umzuwandeln.

Bei dem Photovoltaikelement 36 kann es sich um eine zu den optischen Sensoren 34 separate Komponente handeln. Alternativ kann das Photovoltaikelement 36 aber auch ein optischer Sensor 34 sein, der zum Erfassen optischer Signale der Signalleuchte 16 genutzt wird.

Bei dem in Figur 2 gezeigten System 10 bzw. der Signalleuchtenüberwachungsvorrichtung 22 sind die Auswerteeinheit 28 und die optische Erfassungseinheit 24 auf einem gemeinsamen Träger 38 angeordnet, beispielsweise einer flexiblen Platine, die an die Form der Signalleuchte 16 angepasst und dadurch einfach an diese angebracht werden kann. Auch eine Anordnung in einem gemeinsamen Gehäuse ist denkbar.

Die optische Erfassungseinheit 24 und die Auswerteeinheit 28 sind dabei über Leitungen 40 verbunden.

Alternativ oder zusätzlich kann die optische Erfassungseinheit 24 aber auch ein Kommunikationsmodul 32 umfassen, durch das sie kabellos mit der Auswerteeinheit 28 kommunizieren kann. Insofern kann die optische Erfassungseinheit 24 zunächst ein elektrisches Signal erzeugen, welches dann mittels des Kommunikationsmoduls 32 in ein Funksignal weiterverarbeitet wird, um an die Auswerteeinheit 28 kabel- bzw. drahtlos übermittelt zu werden. Mit anderen Worten wird das optisch erfasste Signal von der Erfassungseinheit 24 mehrfach verarbeitet, bevor es an die Auswerteeinheit 28 kabel- bzw. drahtlos übermittelt wird. Insbesondere erfolgt die Kommunikation über wenig energieaufwändige Kommunikationsstandards, beispielsweise Bluetooth Low Energy ("BLE"), mioty^{®}, ZigBee oder ähnliches.

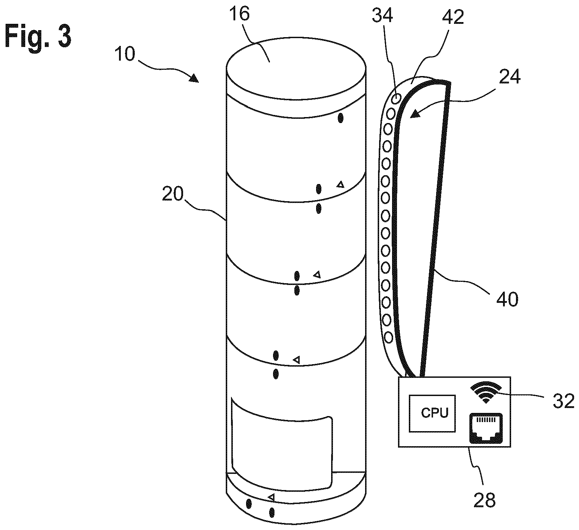

Figur 3 zeigt eine schematische Darstellung eines Ausschnittes einer weiteren Ausführungsvariante eines erfindungsgemäßen Systems 10 mit einer erfindungsgemäßen Signalleuchtenüberwachungsvorrichtung 22.

Dieses entspricht im Wesentlichen den in Figur 1 und Figur 2 gezeigten Systemen 10, sodass im Folgenden lediglich auf die Unterschiede eingegangen wird. Gleiche und/oder funktionsgleiche Bauteile sind mit den gleichen Bezugszeichen versehen.

Bei dem in Figur 3 gezeigten System 10 bzw. der Signalleuchtenüberwachungsvorrichtung 22 ist die optische Erfassungseinheit 24 als Sensorstreifen ausgebildet, der eine Vielzahl optischer Sensoren 34 umfasst.

Die optische Erfassungseinheit 24 ist dabei so an der Signalleuchte 16 angebracht, dass jedes der im Ausführungsbeispiel gleichhohen Segmente 20 von mindestens einem der optischen Sensoren 34 erfasst wird. Um dieses zu gewährleisten, ist der Abstand benachbarter optischer Sensoren 34 kleiner gleich der halben Höhe eines Segments 20 gewählt.

Kleinere Abstände haben den Vorteil, dass mehrere optische Sensoren 34 gleichzeitig ein Segment 20 erfassen, was die Zuverlässigkeit der Signalleuchtenüberwachungsvorrichtung 22 verbessert. Es wird eine Redundanz bei der Erfassung eines Segments 20 geschaffen.

Im Ausführungsbeispiel weist die optische Erfassungseinheit 24 außerdem ein Befestigungselement 42 auf, beispielsweise einen Klebestreifen, mit dem sie an der Signalleuchte 16 befestigt ist. Alternativ kann als Befestigungselement 42 auch eine Schraub-, Steck- oder Rastverbindung, insbesondere ein Kabelbinder, genutzt werden.

Die in den Figuren 1 bis 3 gezeigten Signalleuchtenüberwachungsvorrichtungen 22 sind jeweils dazu vorgesehen, mit bzw. in einem Verfahren zum Überwachen einer Signalleuchte 16 betrieben bzw. genutzt zu werden. Das Verfahren wird im Folgenden kurz erläutert.

In einem ersten Schritt des Verfahrens erfasst die optische Erfassungseinheit 24 der jeweiligen Signalleuchtenüberwachungsvorrichtung 22 ein durch die Signalleuchte 16 ausgegebenes optisches Signal.

In einem zweiten Schritt des Verfahrens generiert die optische Erfassungseinheit 24 ein erfasstes Signal basierend auf dem erfassten optischen Signal.

In einem dritten Schritt des Verfahrens erzeugt die Auswerteeinheit 28 der jeweiligen Signalleuchtenüberwachungsvorrichtung 22 eine Statusinformation durch Auswerten des von der optischen Erfassungseinheit 24 generierten Signals.

In einem vierten Schritt des Verfahrens übermittelt die Auswerteeinheit 28 die Statusinformation und macht diese dadurch nutzbar.

### Bezugszeichenliste

| Bezugszeichen | Benennung |
|---|---|
| 10 | System |
| 12 | Anlage |
| 14 | Maschine |
| 16 | Signalleuchte |
| 18 | Wartungspersonal |
| 20 | Segment |
| 22 | Signalleuchtenüberwachungsvorrichtung |
| 24 | Optische Erfassungseinheit |
| 26 | Kamera |
| 28 | Auswerteeinheit |
| 30 | Zentraleinheit |
| 32 | Kommunikationsmodul |
| 34 | Optischer Sensor |
| 36 | Photovoltaikelement |
| 38 | Träger |
| 40 | Leitung |
| 42 | Befestigungselement |
| 44 | Maschinentüre |

## Patentansprüche

1. Signalleuchtenüberwachungsvorrichtung zur Überwachung wenigstens einer Signalleuchte (16) einer Anlage (12), mit zumindest einer optischen Erfassungseinheit (24), die dazu ausgebildet ist, ein durch eine Signalleuchte (16) ausgegebenes Signal optisch zu erfassen und basierend auf dem erfassten Signal ein erfasstes Signal zu generieren, und einer Auswerteeinheit (28), die dazu ausgebildet ist, das von der optischen Erfassungseinheit (24) generierte Signal auszuwerten und basierend auf dem Auswertungsergebnis eine Statusinformation auszugeben.

2. Signalleuchtenüberwachungsvorrichtung nach Anspruch 1, wobei die optische Erfassungseinheit (24) dazu ausgebildet ist, zumindest eine Eigenschaft des optischen Signals zu erfassen und das erfasste Signal in Abhängigkeit der erfassten Eigenschaft zu generieren, insbesondere wobei die Eigenschaft eine Lichtfarbe, eine Intensität und/oder eine Signalabfolge ist.

3. Signalleuchtenüberwachungsvorrichtung nach Anspruch 1 oder 2, wobei die Auswerteeinheit (28) und die optische Erfassungseinheit (24) auf einem gemeinsamen Träger (38) oder in einem gemeinsamen Gehäuse angeordnet sind.

4. Signalleuchtenüberwachungsvorrichtung nach einem der vorhergehenden Ansprüche, wobei zumindest die optische Erfassungseinheit (24) ein Kommunikationsmodul (32) umfasst, das dazu ausgebildet ist, kabellos mit der Auswerteeinheit (28) zu kommunizieren.

5. Signalleuchtenüberwachungsvorrichtung nach einem der vorhergehenden Ansprüche, umfassend ein Photovoltaikelement (36), das dazu ausgebildet ist, Licht in elektrische Energie zum Betreiben der optischen Erfassungseinheit (24) und/oder der Auswerteeinheit (28) umzuwandeln.

6. Signalleuchtenüberwachungsvorrichtung nach einem der vorhergehenden Ansprüche, wobei die optische Erfassungseinheit (24) zumindest eine Kamera (26) zum Erfassen des optischen Signals umfasst.

7. Signalleuchtenüberwachungsvorrichtung nach Anspruch 6, wobei die Kamera (26) dazu ausgebildet ist, mehrere optische Signale verschiedener Signalleuchten (16) zu erfassen, insbesondere gleichzeitig, und/oder wobei die Kamera (26) dazu ausgebildet ist, weitere Elemente und/oder Zustände der Anlage (12) zu erfassen, die die Signalleuchte (16) aufweist.

8. Signalleuchtenüberwachungsvorrichtung nach einem der vorhergehenden Ansprüche, wobei die optische Erfassungseinheit (24) mehrere optische Sensoren (34) umfasst.

9. System mit einer Signalleuchtenüberwachungsvorrichtung (22) nach einem der vorhergehenden Ansprüche und einer Anlage (12), die eine Signalleuchte (16) umfasst.

10. System nach Anspruch 9, wobei die optische Erfassungseinheit (24) zumindest einen optischen Sensor (34) aufweist, der der Signalleuchte (16) zugeordnet ist, insbesondere unmittelbar an der Signalleuchte (16) angebracht ist.

11. System nach Anspruch 10, wobei die Signalleuchte (16) mehrere Segmente (20) aufweist, und wobei die optische Erfassungseinheit (24) mehrere optische Sensoren (34) umfasst, die über die mehreren Segmente (20) der Signalleuchte (16) verteilt angeordnet sind.

12. System nach einem der Ansprüche 9 bis 11, wobei die Anlage (12) zumindest eine Maschine (14) umfasst.

13. System nach einem der Ansprüche 9 bis 12, wobei eine Zentraleinheit (30) vorgesehen ist, die eingerichtet ist, die Statusinformation zu erhalten und zu verarbeiten.

14. System nach Anspruch 13, wobei die Auswerteeinheit (28) ein Kommunikationsmodul (32) aufweist, das dazu ausgebildet ist, kabellos mit der Zentraleinheit (30) zu kommunizieren, insbesondere die Statusinformation kabellos an die Zentraleinheit (30) zu übertragen.

15. Verfahren zum Überwachen einer Signalleuchte (16) mit einer Signalleuchtenüberwachungsvorrichtung (22) nach einem der Ansprüche 1 bis 8, umfassend die Schritte:
- Erfassen eines durch die Signalleuchte (16) ausgegebenen optischen Signals;
- Generieren eines Signals basierend auf dem erfassten optischen Signal mittels einer Erfassungseinheit (24);
- Erzeugen einer Statusinformation durch Auswerten des von der optischen Erfassungseinheit (24) generierten Signals; und
- Übermitteln der Statusinformation.

## Geänderte Patentansprüche

### Geänderte Patentansprüche gemäss Regel 137(2) EPÜ.

1. Signalleuchtenüberwachungsvorrichtung zur Überwachung wenigstens einer Signalleuchte (16) einer als Industrieanlage ausgebildeten Anlage (12), mit zumindest einer optischen Erfassungseinheit (24), die dazu ausgebildet ist, ein durch eine Signalleuchte (16) ausgegebenes Signal optisch zu erfassen und basierend auf dem erfassten Signal ein erfasstes Signal zu generieren, und einer Auswerteeinheit (28), die dazu ausgebildet ist, das von der optischen Erfassungseinheit (24) generierte Signal auszuwerten und basierend auf dem Auswertungsergebnis eine Statusinformation auszugeben, **dadurch gekennzeichnet, dass** die Signalleuchtenüberwachungsvorrichtung (22) zum Nachrüsten der Anlage (12) derart ausgebildet ist, dass beim Nachrüsten auf eine bereits vorhandene Kamera der Anlage (12), die Teil eines Überwachungs- oder Sicherheitssystems der Anlage (12) ist und als Kamera (26) der optischen Erfassungseinheit (24) in der Signalleuchtenüberwachungsvorrichtung (22) genutzt wird, um das Signal optisch zu erfassen, und/oder eine bereits vorhandene Hardware der Anlage (12) in Form einer Zentraleinheit (30) zurückgegriffen wird, die Bestandteil einer physischen oder virtuellen Rechner- und/oder Netzwerkstruktur zur Überwachung und/oder Steuerung der Anlage (12) ist.

2. Signalleuchtenüberwachungsvorrichtung nach Anspruch 1, wobei die optische Erfassungseinheit (24) dazu ausgebildet ist, zumindest eine Eigenschaft des optischen Signals zu erfassen und das erfasste Signal in Abhängigkeit der erfassten Eigenschaft zu generieren, insbesondere wobei die Eigenschaft eine Lichtfarbe, eine Intensität und/oder eine Signalabfolge ist.

3. Signalleuchtenüberwachungsvorrichtung nach Anspruch 1 oder 2, wobei die Auswerteeinheit (28) und die optische Erfassungseinheit (24) auf einem gemeinsamen Träger (38) oder in einem gemeinsamen Gehäuse angeordnet sind.

4. Signalleuchtenüberwachungsvorrichtung nach einem der vorhergehenden Ansprüche, wobei zumindest die optische Erfassungseinheit (24) ein Kommunikationsmodul (32) umfasst, das dazu ausgebildet ist, kabellos mit der Auswerteeinheit (28) zu kommunizieren.

5. Signalleuchtenüberwachungsvorrichtung nach einem der vorhergehenden Ansprüche, umfassend ein Photovoltaikelement (36), das dazu ausgebildet ist, Licht in elektrische Energie zum Betreiben der optischen Erfassungseinheit (24) und/oder der Auswerteeinheit (28) umzuwandeln.

6. Signalleuchtenüberwachungsvorrichtung nach einem der vorhergehenden Ansprüche, wobei die Kamera (26) dazu ausgebildet ist, mehrere optische Signale verschiedener Signalleuchten (16) zu erfassen, insbesondere gleichzeitig, und/oder wobei die Kamera (26) dazu ausgebildet ist, weitere Elemente und/oder Zustände der Anlage (12) zu erfassen, die die Signalleuchte (16) aufweist.

7. Signalleuchtenüberwachungsvorrichtung nach einem der vorhergehenden Ansprüche, wobei die optische Erfassungseinheit (24) mehrere optische Sensoren (34) umfasst.

8. Signalleuchtenüberwachungsvorrichtung nach einem der vorhergehenden Ansprüche, wobei die Kamera (26) dazu ausgebildet ist, zu erfassen, ob eine Anlagentüre geöffnet oder geschlossen ist, ob sich ein Werkstück in der Anlage befindet und/oder ob sich eine Person in einem Gefahrenbereich der Anlage (12) befindet.

9. System mit einer Signalleuchtenüberwachungsvorrichtung (22) nach einem der vorhergehenden Ansprüche und einer Anlage (12), die eine Signalleuchte (16) umfasst.

10. System nach Anspruch 9, wobei die optische Erfassungseinheit (24) zumindest einen optischen Sensor (34) aufweist, der der Signalleuchte (16) zugeordnet ist, insbesondere unmittelbar an der Signalleuchte (16) angebracht ist.

11. System nach Anspruch 10, wobei die Signalleuchte (16) mehrere Segmente (20) aufweist, und wobei die optische Erfassungseinheit (24) mehrere optische Sensoren (34) umfasst, die über die mehreren Segmente (20) der Signalleuchte (16) verteilt angeordnet sind.

12. System nach einem der Ansprüche 9 bis 11, wobei die Anlage (12) zumindest eine Maschine (14) umfasst.

13. System nach einem der Ansprüche 9 bis 12, wobei die Zentraleinheit (30) eingerichtet ist, die Statusinformation zu erhalten und zu verarbeiten.

14. System nach einem der Ansprüche 9 bis 13, wobei die Auswerteeinheit (28) ein Kommunikationsmodul (32) aufweist, das dazu ausgebildet ist, kabellos mit der Zentraleinheit (30) zu kommunizieren, insbesondere die Statusinformation kabellos an die Zentraleinheit (30) zu übertragen.

15. Verfahren zum Überwachen einer Signalleuchte (16) mit einer Signalleuchtenüberwachungsvorrichtung (22) nach einem der Ansprüche 1 bis 8, umfassend die Schritte:
- Erfassen eines durch die Signalleuchte (16) ausgegebenen optischen Signals;
- Generieren eines Signals basierend auf dem erfassten optischen Signal mittels einer Erfassungseinheit (24);
- Erzeugen einer Statusinformation durch Auswerten des von der optischen Erfassungseinheit (24) generierten Signals; und
- Übermitteln der Statusinformation.
